Europäisches Patentamt

European Patent Office

Office européen des brevets

(19)

(11) Veröffentlichungsnummer: **0 036 115**
**B2**

(12)

# NEUE EUROPÄISCHE PATENTSCHRIFT

(45) Veröffentlichungstag der neuen Patentschrift:
19.11.87

(51) Int. Cl.⁴: **H 02 J 13/00**

(21) Anmeldenummer: **81101416.6**

(22) Anmeldetag: **26.02.81**

(54) Tonfrequenz-Rundsteueranlage mit einer Stromüberwachungseinrichtung.

(30) Priorität: **05.03.80 DE 3008480**

(43) Veröffentlichungstag der Anmeldung:
**23.09.81 Patentblatt 81/38**

(45) Bekanntmachung des Hinweises auf die Patenterteilung:
**05.10.83 Patentblatt 83/40**

(45) Bekanntmachung des Hinweises auf die Entscheidung über den Einspruch:
**19.11.87 Patentblatt 87/47**

(84) Benannte Vertragsstaaten:
**CH DE FR LI**

(56) Entgegenhaltungen:
DE - A - 2 506 549
DE - A - 2 750 394

"Technische Mitteilungen", AEG-TELEFUNKEN 61 (1971) 6, S. 313-316
Elektrizitätswirtschaft, Jg. 1971, Heft 9, S. 237-240
Firmendruckschrift der Fa. SIEMENS AG, "Netzautomatisierungssystem 300, Rundsteuersystem", Deckblatt u. S. 14
Elektrizitätswirtschaft, Jg. 77 (1978), Heft 10, S. 352-355
"Technische Mitteilungen" AEG-TELEFUNKEN 62 (1972) 6, S. 237-242
Buch v. Heumann /Stumpe "Thyristoren, Eigenschaften und Anwendungen" 3. Aufl. 1974, S. 187,200,201

(73) Patentinhaber: **Siemens Aktiengesellschaft Berlin und München, Wittelsbacherplatz 2, D-8000 München 2 (DE)**

(72) Erfinder: **Klausecker, Karl, Dipl.-Ing., Dompfaffstrasse 5, D-8520 Erlangen (DE)**
Erfinder: **Müller, Manfred, Thumenbergerweg 5, D-8500 Nürnberg (DE)**

ACTORUM AG

**Beschreibung**

Die Erfindung betrifft eine Tonfrequenz-Rundsteueranlage mit den im Oberbegriff des Anspruches 1 angegebenen Merkmalen.

Eine derartige Rundsteueranlage ist aus der DE-A-27 50 394 bekannt.

Mit Rundsteueranlagen werden als Impulszüge verschlüsselte Informationen über eine Drehstrom- oder ein Wechselstrom-Versorgungsnetz an Verbraucher gesendet, wo sie entschlüsselt werden und zu Schaltvorgängen z.B. zur Umschaltung von Verbraucherzählern auf unterschiedliche Tarife oder zum Einschalten von Signalvorrichtungen zur Benachrichtigung bestimmter Personenkreise (Feuerwehr), dienen. Dabei werden meist niederfrequente Schwingungen im Frequenzbereich zwischen 150 Hz und 500 Hz jeweils für die Dauer von vorgegebenen Taktimpulsen verwendet.

Zum Senden werden diese Frequenzen mit einem Wechselrichter erzeugt und vorteilhaft durch Serieneinspeisung ins Netz der Netzfrequenz überlagert. Dem Wechselrichtereingang ist eine Eingangsgleichspannung eingeprägt, die durch entsprechende Zündung der Wechselrichterventile mit der Sende-Tonfrequenz in Form von Spannungsblöcken von 180° Länge mit alternierendem Vorzeichen an die zwei (Wechselstromnetz), drei (Drehstromnetz) oder mehr Phasenausgänge des Wechselrichters gegeben wird. Zur galvanischen Trennung und Spannungsanpassung der Phasenspannungen sind den Ausgängen vorteilhaft Längsinduktivitäten und ein Anpassungstransformator nachgeschaltet. Diese Induktivitäten sind so klein als möglich bemessen, um noch eine gute Dämpfung der Oberschwingungen zu bewirken und bei Belastung keine allzu grossen Spannungsabfälle zu verursachen. Die Serieneinspeisung der Sendefrequenz geschieht durch Stromwandler, deren im Dreieck geschaltete Primärwicklungen an die Phasenspannungen und deren Sekundärwicklungen ins Versorgungsnetz gelegt sind. Parallel zu den Stromwandlern sind Filterkreise angeordnet, die als Drehstromfilter darauf abgestimmt sind, durch einen kleinen Wechselstromwiderstand für die Netzfrequenz den Wechselrichter vor Rückwirkungen der Netzfrequenz zu schützen und andererseits durch einen grossen Wechselstromwiderstand für die Tonfrequenz diese Tonfrequenz möglichst verlustarm auf die Stromwandler zu übertragen.

Beim Einschalten des Senders, d.h. zu Beginn jedes Sendetaktes, entsteht ein erheblicher Einschaltstromstoss, der durch die kleinbemessenen Längsinduktivitäten nur ungenügend gedämpft wird und zu einer Überlastung des Wechselrichters durch grosse Stromspitzen führt.

Daher ist in «Elektrizitätswirtschaft» 77 (1978), S. 352–357 vorgeschlagen, den Wechselrichter-Eingangsstrom auf Überschreiten eines maximal kommutierbaren Momentanwertes zu überwachen. Im Wechselrichter, der im ungestörten Betrieb jeweils über zwei stromführende, zwangslöschbare Thyristoren Spannungsblöcke von 120° Länge auf zwei seiner Ausgangsphasen durchschaltet, werden dann die bereits gezündeten Thyristoren, letztlich also der Strom, gelöscht.

Vorteilhaft wird der Wechselrichter aber als Pulswechselrichter ausgeführt, wie er in DE-B-24 56 344 beschrieben ist und bei dem durch höherfrequentes alternierendes Zünden der jeweils auf einen Phasenausgang arbeitenden Wechselrichterventile innerhalb jeder tonfrequenten Halbschwingung jede Phasenspannung des Wechselrichterausgangs aus kurzen Spannungsblöcken alternierenden Vorzeichens zusammengesetzt wird. Jede Phasenspannung enthält also eine tonfrequente Grundschwingung und Oberschwingungen, wobei die Oberschwingungen durch die Längsinduktivitäten und ggf. den Anpassungstransformator geglättet und infolge von Resonanzschwingvorgängen in den Filterkreisen nahezu als sinusförmige Spannung den Wandlereingängen zugeführt wird. Die Amplitude der tonfrequenten Grundschwingung kann durch das Einschalt-Zeitverhältnis der jeweiligen Wechselrichterventile eines Phasenausgangs, d.h. durch die Spannungszeitfläche der entsprechenden Phasenspannung, verändert werden. Dies ermöglicht es, durch entsprechende Steuerung des Einschaltverhältnisses den Pulswechselrichter zu Beginn jedes Sendetaktes langsam auf volle Ausgangsleistung hochzufahren, so dass unzulässig hohe Einschaltstromspitzen vermieden werden.

Trotzdem kann es durch andere Störungen, z.B. Lastschwankungen oder transiente Vorgänge am Wechselrichterausgang zu kurzzeitigen Spitzenströmen («Überströmen») kommen, bei denen eine sichere Kommutierung des Wechselrichters nicht mehr möglich ist. Daher muss die Anlage auf Überstrom überwacht werden, um den Wechselrichter durch Abschalten der Anlage oder andere Eingriffe in die Wechselrichtersteuerung zu schützen. Eine Abschaltung sollte nur in extremen Notfällen vorgenommen werden, da sie zu einer Verstümmelung der Information und zu falschen Handlungen am Verbraucher führen kann.

Daher ist in der erwähnten DE-A-27 50 394 eine Überwachungseinrichtung vorgesehen, die die Phasenströme zwischen dem Wechselrichter und den Filterkreisen erfasst und bei Überschreiten eines vorgegebenen Stromgrenzwertes so in die Zündsteuerung des Wechselrichters eingreift, dass die Amplitude der tonfrequenten Phasenspannungen durch eine Verkleinerung der Spannungszeitflächen verringert wird, um dann den Sender, wie beim Anlaufvorgang, allmählich wieder auf volle Ausgangsleistung hochzufahren. Es hat sich nun in manchen Fällen gezeigt, dass bei einer derartigen Anlage, bei der bei Ansprechen der Überwachungsanlage im Sinne einer Verringerung der Sendeleistung in die Zündsteuerung aller Wechselrichterventile eingegriffen wird, die Überwachungsanlage in manchen Fällen häufig hintereinander anspricht. Ein Hochfahren des Senders auf maximale Leistung ist dann nur sehr langsam oder überhaupt nicht möglich, wobei die Gefahr besteht, dass die reduzierte Sendeleistung nicht mehr zur Übertragung der Sendesignale bis zu den Empfängern (Verbrauchern) ausreicht. Dieser Fall kann z.B. auftreten, wenn die Überstromspitzen nicht durch vorübergehende Störungen verursacht sind. Insbesondere tritt dies auf, wenn die Filterkreise während der Sendepausen durch entsprechende Schalter kurzgeschlossen sind, die zu Beginn eines Sendetaktes geöffnet werden. Derartige Schalter sind vorteilhaft, um z.B. die Filterkreise während der Sendepausen zu entlasten.

Der Erfindung liegt die Aufgabe zugrunde, einen Rundsteuersender mit den im Oberbegriff des Anspruchs 1 angegebenen Merkmalen so auszubilden, dass durch einen anderen Eingriff in die Wechselrichtersteuerung nicht nur auf Spitzenströme reagiert werden kann, sondern auch eine mögliche Ursache für deren Auftreten selbst korrigiert wird. Insbesondere soll durch die Erfindung der Betrieb einer Rundsteueranlage verbessert werden, deren Filter durch die erwähnten Schalter während der Sendepausen kurzschliessbar sind.

Es hat sich nun gezeigt, dass die Wandlerspulen einer derartigen Rundsteueranlage häufig zu Beginn eines Sendetaktes vormagnetisiert sind. Insbesondere bei Verwendung der erwähnten Schalter für die Filterkreise tritt eine derartige Vormagnetisierung beim Öffnen der Schalter zu Beginn des Sendetaktes auf. Die Vormagnetisierung macht sich darin bemerkbar, dass der ungefähr sinusförmige Zeitverlauf des magnetischen Flusses in den Wandlern (messbar als zeitliches Integral der den Wandlerspulen eingeprägten Speisespannung) gegenüber dem Mittelpunkt der Hysteresekennlinien der Wandlerspulen verschoben ist. Dadurch werden die Wandler stets bei jeder zweiten Halbwelle der tonfrequenten Speisespannung in die Sättigung getrieben, so dass es jeweils zu einer erhöhten Stromaufnahme aus dem Wechselrichter kommt. Der Erfindung liegt daher der Gedanke zugrunde, beim Auftreten eines derartigen Spitzenstromes am Wandlerausgang nicht nur die Spannungszeitfläche der entsprechenden tonfrequenten Phasenausgangs-Spannungshalbwelle (und damit den momentanen Ausgangsstrom) zum Schutz des Wechselrichters herabzusetzen, sondern auch die Ursache, nämlich die Vormagnetisierung der Wandler, zu bekämpfen.

Gemäss der Erfindung wird dies erreicht durch eine Rundsteueranlage mit den im Anspruch 1 angegebenen Merkmalen.

Die Überwachungseinrichtung gibt demnach sobald an einem der Phasenausgänge des Wechselrichters ein den vorgegebenen Grenzwert überschreitender Strom auftritt, einen diesem betreffenden Wechselrichterausgang zugeordneten Eingriffsbefehl ab. Mit diesem Befehl wird nur in die Steuerung der auf diesen Ausgang arbeitenden Wechselrichterventile eingegriffen, die Steuerung der anderen Wechselrichterventile bleibt unberührt. Der Eingriff erfolgt derart, dass die am zugeordneten Ausgang anstehende Phasenspannung einen Gleichspannungsanteil enthält, der in den Wandlerspulen zu einem die Vormagnetisierung reduzierenden Entmagnetisierungs-Gleichstromanteil führt. Die Polarität dieses Gleichstromanteils ist dem Spitzenstrom entgegengesetzt, so dass gleichzeitig auch der den Eingriffsbefehl auslösende Spitzenstrom herabgesetzt wird.

Tritt ein derartiger Eingriffsbefehl z.B. auf, wenn der Wechselrichter bereits auf volle Ausgangsleistung hochgefahren ist und die Phasenausgangsspannungen aus Spannungsblöcken der halben Tonfrequenz-Periode mit alternierendem Vorzeichen erzeugt wird, und tritt ein Eingriffsbefehl während einer positiven Phasenausgangsspannung auf, so wird demgemäss kurzfristig durch Zünden des anderen Wechselrichterventils der entsprechende Phasenausgang vorübergehend auf negative Spannung umgepolt. Bei der nächsten tonfrequenten Halbwelle, bei der eine negative Phasenausgangsspannung erzeugt wird, wird ein derartiger Eingriff nicht vorgenommen. Die positive Spannungshalbwelle wird also einmalig gegenüber dem ungestörten Betrieb herabgesetzt. Ähnlich kann auch vorgegangen werden, wenn die tonfrequente Grundschwingung der Phasenspannung durch mehrfaches alternierendes Zünden der Wechselrichterventile (Hin- und Herpulsen der Phasenausgangsspannung zwischen zwei Spannungswerten entgegengesetzten Vorzeichens) innerhalb jeder Tonfrequenz-Halbschwingung erzeugt wird. Dieser Fall tritt insbesondere während des Anlaufvorganges bei der bekannten Vorrichtung auf, wo durch einen entsprechenden Pulsbetrieb die Amplitude der Tonfrequenz langsam hochgefahren wird. Z. B. trifft eine positive Stromspitze bei einem derartigen Hochlauf auf einen Betriebszustand des Wechselrichters, bei dem der Wechselrichterausgang durch Stromführung des entsprechenden Wechselrichterventils auf die positive Polarität der Eingangsspannung gelegt ist. Der Eingriffsbefehl bewirkt dann, dass dieses Ventil gesperrt und der Wechselrichterausgang durch Zünden des anderen Ventils vorübergehend auf negative Spannung gelegt wird. Die Spannungszeitfläche der positiven tonfrequenten Halbwelle wird dadurch gegenüber dem Wert herabgesetzt, der bei ungestörtem Anlaufvorgang vorgesehen ist und ungefähr dem Mittelwert der vorangegangenen und der nachfolgenden negativen Halbwellen entspricht.

Die Dauer, während welcher jeweils das andere Ventil zur Erzeugung des Gleichspannungsanteils zu zünden ist, darf einen gewissen Wert, der der geringstmöglichen Stromführungsdauer des Wechselrichters entspricht, nicht unterschreiten. Eine besonders einfache Steuerung ergibt sich, wenn die Dauer der erläuterten Spannungsumschaltung konstant auf dieser minimalen Stromführungsdauer des Wechselrichters gehalten wird. Bei jedem Eingriffsbefehl wird also die Verringerung der Spannungszeitfläche um einen Betrag vorgenommen, der unabhängig von der Dauer der Strom-Grenzwert-Überschreitung ist.

Bevorzugt wird bei Auftreten eines Eingriffsbefehls nur einmalig eingegriffen und die weitere Zündsteuerung ungestört gelassen. Sollte jedoch nach einem einmaligen Eingriff der Phasenstrom erneut den Grenzwert überschreiten, so führt dies zu einem neuen Eingriffsbefehl und die korrigierende Massnahme wird wiederholt. Dies kann auftreten, wenn die Wandlervormagnetisierung nicht in einem Schritt behoben werden kann oder wenn die Überströme nicht durch die Vormagnetisierung der Stromwandler, sondern durch andere Vorgänge hervorgerufen werden. In solchen Fällen können die Spitzenströme in allen Phasenausgängen und sowohl während der positiven wie während der negativen Tonfrequenz-Halbschwingungen auftreten. Dies führt dann dazu, dass entsprechende Eingriffsbefehle für alle Phasenausgänge und bei allen Polaritäten auftreten, und insgesamt die gesamte Amplitude der Tonfrequenzschwingung verringert wird. Ernsthafte Störungen sind jedoch nur dann zu befürchten, wenn trotz dieser Massnahmen die Spitzenströme nicht ausreichend herabgesetzt werden können. Für eine derartige ernsthafte Störung kann es vorteilhaft sein, mittels eines Grenzwertmelders die gesamte Anlage abzuschalten, wenn die Phasenströme die erwähnten Grenzwerte der Überwachungseinrichtung erheblich übersteigen.

Anhand eines Ausführungsbeispieles und zweier Figuren wird die Erfindung näher erläutert.

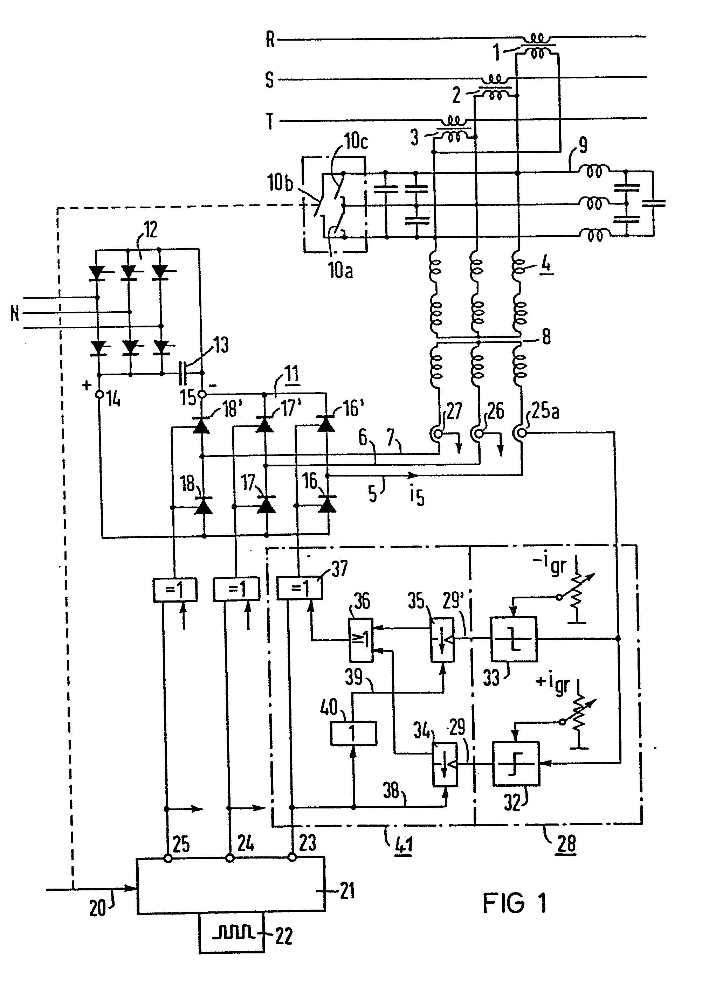

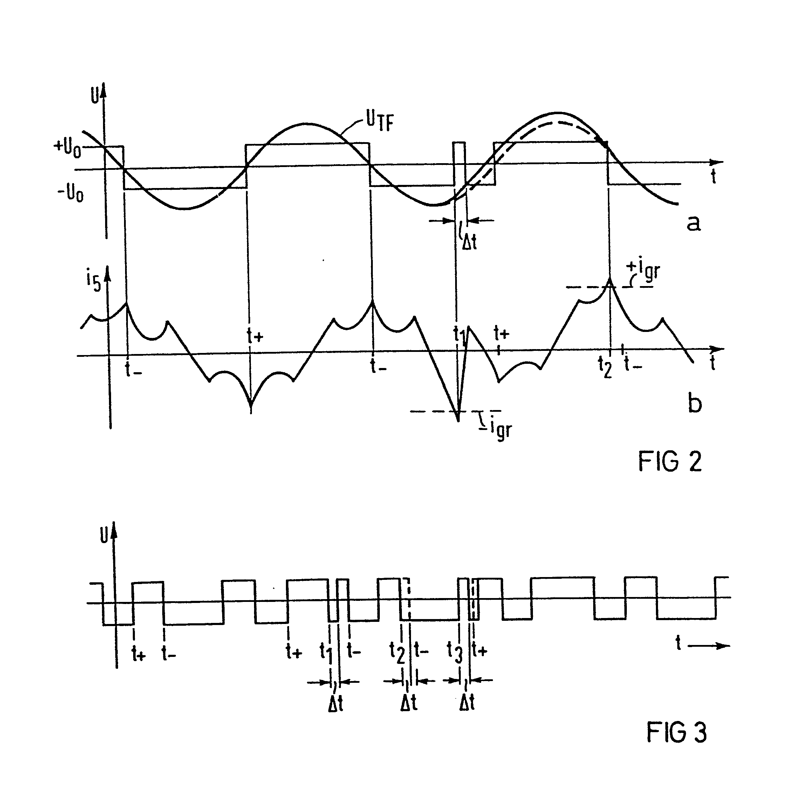

Figur 1 zeigt eine Rundsteueranlage nach der Erfindung, Figur 2 den Verlauf einer Phasenspannung und eines Phasenstroms bei ungepulstem Betrieb des Wechselrichters, Figur 3 den Verlauf der Phasenspannung bei gepulstem Betrieb.

Nach Figur 1 wird den Phasen R, S, T eines Drehstrom-Versorgungsnetzes eine tonfrequente Wechselspannung aufgeprägt. Dazu sind in die Wechselstromleitungen die Primärspulen von Wandler-Transformatoren gelegt, deren Sekundärspulen 1, 2, 3 im Dreieck miteinander verbunden sind. Die Eingänge dieser Stromwandlerspulen 1, 2, 3 sind über Induktivitäten 4 jeweils mit einem Ausgang 5, 6, 7 eines Wechselrichters verbunden, wobei der Wechselrichtertransformator 8 zur galvanischen Trennung und zur Anpassung der Spannungen dient. Unmittelbar parallel zu den Stromwandlern 1, 2, 3 sind die Filterkreise eines Drehstromfilters 9 geschaltet, das in der gezeichneten Weise aus Kapazitäten und Induktivitäten aufgebaut ist. Vorteilhaft ist ferner eine Schalteinrichtung aus Schaltern 10a, 10b, 10c vorgesehen, durch die jeweils die Anschlüsse einer Spule miteinander verbunden werden können, so dass die Filterkreise kurzschliessbar sind.

Als Sender für die tonfrequenten Spannungen in den Wechselrichterausgangsphasen 5, 6, 7 dient der Wechselrichter 11, dessen Gleichspannungsseite über einen netzgeführten Gleichrichter 12 und einen Parallelkondensator 13 aus einem niederfrequenten Wechselspannungsnetz N eine vorgebbare Eingangsgleichspannung eingeprägt ist. Vorzugsweise handelt es sich bei dem selbstgeführten Wechselrichter 11 um einen Wechselrichter in Brückenschaltung mit Pulsbetrieb, dessen Ausgänge jeweils durch Zünden der dazugehörigen Ventile 16, 17, 18 jedes Brückenzweiges auf die Spannung an der positiven Eingangsklemme 14 bzw. bei Stromführung der anderen Ventile 16', 17', 18' auf das negative Eingangspotential der Klemme 15 gelegt werden.

Die Länge der Sendetakte und Sendepausen für die zu sendende Tonfrequenz werden über eine Leitung 20 einer Zündsteuerung 21 vorgegeben, die aus den Impulsen einer auf die Tonfrequenz oder ein Vielfaches der Tonfrequenz abgestimmten Generatoreinrichtung 22 die Wechselrichterzündimpulse bildet. Während der Sendepausen werden alle Wechselrichterzündimpulse unterdrückt, während der Sendetakte werden an die Zündsteuerleitungen 23, 24, 25 entsprechende Spannungsimpulse gelegt, aus denen die (nicht dargestellten) Steuereinheiten der Ventile 16, ... 18' die Zündimpulse für die Wechselrichterventile formen.

Die bisher beschriebenen Teile der Anlage nach Figur 1 können z.B. auf die in der DE-B-24 56 344 angegebenen Weise ausgeführt sein. In dieser bekannten Anlage wird von der Steuereinrichtung für jeden Brückenzweig eine Spannung erzeugt, die als Folge binärer Signale alternierend die Werte $+U_0$ und $-U_0$ annimmt. An der Steuerleitung 23 bewirkt eine derartige binäre Signalfolge, dass das Ventil 16 jeweils für Spannungswerte $+U_0$ («1»-Zustand) gezündet ist. Das andere Ventil 16' dieses Brückenzweiges wird analog durch die Spannungswerte $-U_0$ («0»-Zustand) stromführend. Die Spannung an der Wechselrichterausgangsphase 5 folgt diesem Spannungsverlauf. Dabei kann eine Pulsbreitenmodulation durchgeführt werden, bei der die Grundschwingungen $U_{TF}$ der Phasenspannung und somit auch die Grundschwingung der Spannungszeitflächen die Tonfrequenz besitzen. Während des Hochlaufens zu Beginn jedes Sendetaktes wird durch Veränderung der Pulsbreitenmodulation (Figur 3) die Amplitude der Schwingung $U_{TF}$ erhöht, bis bei maximaler Ausgangsleistung die Phasenspannung sich aus Spannungsblöcken von 180° el Breite zusammensetzt (Figur 2). Diese bekannte Pulsbreitenmodulation ist auch für den Wechselrichter 11 vorteilhaft.

Figur 2b zeigt den Verlauf des Stromes $i_5$ in der Wechselrichterausgangsphase 5. $t_+$ und $t_-$ sind die von der Zündsteuerung vorgegebenen Umschaltzeitpunkte, bei denen durch Zünden des Ventils 16 bzw. 16' die Phasenspannung umgepolt wird. Dabei kann es nun vorkommen, dass zu gewissen Zeitpunkten ($t_1$, $t_2$) der Strom in der Phase 5 einen vorgegebenen Grenzwert $+i_{gr}$ bzw. $-i_{gr}$ überschreitet, wobei der Grenzwert so vorgegeben wird, dass noch eine zuverlässige Kommutierung im Wechselrichter möglich ist. Bei Überschreiten dieses Grenzwertes muss in die Wechselrichtersteuerung eingegriffen werden.

In der erwähnten DE-A-27 50 394 ist vorgesehen, die Ströme in den einzelnen Wechselrichterausgängen zu erfassen, daraus einen gemeinsamen Wert für den gesamten Wechselrichterausgangsstrom zu bilden und in die Wechselrichtersteuerung einzugreifen, wenn dieser Ausgangsstrom den vorgegebenen Grenzwert überschreitet. Der Eingriff erfolgt so, dass durch Absenkung der Amplitude jeder Spannung an den Phasenausgängen 5, 6, 7 der Strom begrenzt wird. Dieser Eingriff erfolgt durch Verstellung der Pulsbreitenmodulation, wobei der Verlauf der Spannung $U_{TF}$ weiterhin symmetrisch um den Nullpunkt verläuft.

Im Gegensatz hierzu wird gemäss der vorliegenden Erfindung in der Überwachungseinrichtung 28 (Figur 1) jeder einzelne Phasenstrom getrennt auf Überschreiten des Grenzwertes $i_{gr}$ überwacht. Die Überwachungseinrichtung weist also drei symmetrische Zweige auf, von denen jeweils einer dem Stromwandler 25a bzw. 26 bzw. 27 zugeordnet ist und in Figur 1 lediglich der Übersicht wegen nur ein Zweig 28 dargestellt und im folgenden erläutert ist.

Bei Überschreiten des Grenzwertes für den Phasenstrom $i_5$ wird von der Überwachungseinrichtung 28 an den Befehlsleitungen 29, 29' ein Eingriffsbefehl erzeugt, durch den die Ventile 16, 16' des auf den Phaseneingang 5 arbeitenden Brückenzweiges gegenüber dem ungestörten Betrieb umgeschaltet werden. Vorteilhaft wird die Dauer der Umschaltung unabhängig von der Dauer der Stromgrenzwertüberschreitung gewählt. Hierzu können Zeitglieder (monostabile Kippstufen) dienen, die auf die kleinstmögliche Stromführungsdauer der Wechselrichterventile abgestimmt sind. Übliche Pulswechselrichtersteuerungen enthalten bereits eine Schaltung zur Unterdrückung von zu rasch aufeinander folgenden Umschaltbefehlen, so dass für die Durchführung des Eingriffsbefehls keine weiteren Zeitglieder erforderlich sind. Vielmehr genügt es in diesem Fall, mit dem Eingriffsbefehl an einer geeigneten Stelle der Wechselrichterzündsteuerung einzugreifen und dort bei Auftreten einer Grenzwertüberschreitung vorübergehend die Binärsignalfolge, aus der die Zündimpulse der Wechselrichterventile abgeleitet werden, zu negieren, z.B. mittels eines von den Eingriffsbefehlen beaufschlagten EXKLUSIV-ODER-Gliedes.

In Figur 1 ist schematisch eine Schaltung dargestellt, die zwischen den Zündsteuerausgang einer bestehenden Wechselrichtersteuerung und den Steuergeräten für die entsprechenden Ventile 16, 16' geschaltet werden kann. Vorteilhaft wird dabei das Ausgangssignal des Stromwandlers 25a mit getrennten Grenzwertmeldern 32, 33 auf Überschreiten eines positiven Grenzwertes $+i_{gr}$ bzw. eines negativen Grenzwertes $-i_{gr}$ überwacht.

Solange die Grenzwertmelder 32, 33 keine Grenzwertüberschreitung melden und daher die nachgeschalteten monostabilen Kippstufen 34, 35 nicht angestossen sind, gibt das den Kippstufen nachgeschaltete ODER-Glied 36 einen Null-Zustand an den entsprechenden Eingang eines in der Steuerleitung 23 liegenden EXKLUSIV-ODER-Glied 37. Die von der Steuerung 21 kommenden Zustände (0 bzw. 1) werden also unverändert über das Glied 37 an die Zündgeräte der Ventile 16, 16' gegeben. Dieser ungestörte Betrieb ist in Figur 2 vor dem Zeitpunkt $t_1$, dem Ansprechen des Grenzwertmelders 32 für negative Grenzwertunterschreitung, dargestellt.

Die Kippstufe 34 kann, durch die Leitung 38 derart verriegelt werden, dass der dem positiven Grenzwert zugeordnete Grenzwertmelder 32 nur dann einen 1-Zustand der Kippstufe 34 erzeugt, wenn an der Signalleitung 23 ein 1-Zustand liegt, also wenn bei ungestörtem Betrieb durch Stromführung des Ventils 16 die Phasenspannung positiv ist. Die Kippstufe 34 verharrt für die eingestellte Mindestzeit im 1-Zustand, wenn zwischenzeitlich in der Signalleitung 23 kein Polaritätswechsel auftritt; geht jedoch der Zustand an der Signalleitung 23 vorzeitig in den Nullzustand über, so wird auch der 1-Zustand am Ausgang der Kippstufe 34 vorzeitig beendet. Analog wird über die Verriegelungsleitung 39 und das Negationsglied 40 der Ausgang der der negativen Grenzüberschreitung (Grenzwertmelder 33) zugeordneten Kippstufe im Nullzustand gehalten, wenn an der Signalleitung 23 ein Null-Zustand liegt.

Eine Unterschreitung des negativen Grenzwertes (Fig. 2, Zeitpunkt $t_1$), die mit einem Null-Signal an der Steuerleitung 23 zusammenfällt, erzeugt demnach am ODER-Glied 36 einen 1-Zustand, durch den das EXKLUSIV-ODER-Glied 37 nunmehr ein 1-Signal abgibt, das Ventil 16 gezündet und das zunächst gezündete Ventil 16' verriegelt wird. Für die Mindestzeit $\Delta t$ ist demnach die Phasenspannung am Ausgang 5 positiv, nach Abfallen der Kippstufe 35 wird jedoch der ursprüngliche Stromführungszustand der Ventile wieder hergestellt. Entsprechend wird bei einer positiven Grenzwertüberschreitung, die mit einem 1-Zustand der Signalleitung 23 zusammenfällt (Zeitpunkt $t_2$) durch Ansprechen des Grenzwertmelders 32 und der Kippstufe 34 vom EXKLUSIV-ODER-Glied 37, dessen Eingänge nunmehr beide im 1-Zustand sind, ein Nullzustand erzeugt, durch den das Ventil 16 gesperrt und das Ventil 16' gezündet wird. Am Wechselrichterausgang 5 liegt also jetzt eine negative Spannung an. In dem hier gezeigten Fall geht der Zustand an der Befehlsleitung 23 innerhalb der Mindestzeit $\Delta t$ in den Null-Zustand über, dadurch kippt das Kippglied 35 zurück und das EXKLUSIV-ODER-Glied 37 erhält nun an beiden Eingängen ein Null-Signal. Der Ausgang des Gliedes 37 bleibt also im Null-Zustand und die Ventile werden entsprechend dem ungestörten Betrieb weiter angesteuert.

Diese Steuerung ermöglicht es demnach, mit jedem Eingriffsbefehl durch einen einmaligen Eingriff die negative Spannungszeitfläche (zum Zeitpunkt $t_1$) bzw. die positive Spannungszeitfläche (Zeitpunkt $t_2$) zu verringern und dadurch wahlweise in der Ausgangsspannung einen Gleichanteil zu erzeugen, durch den eine Magnetisierung der Wandler korrigiert werden kann. In Figur 2a ist die Änderung der geglätteten Phasen-

spannung $U_{TF}$ gegenüber dem gestrichelt eingezeichneten, ungestörten Verlauf dargestellt.

Das gleiche Verfahren lässt sich auch bei einem Pulsbetrieb des Wechselrichters anwenden, wie in Figur 3 gezeigt ist. Dabei sind mit $t_+$ und $t_-$ jeweils die von der Zündsteuerung 21 für den ungestörten Betrieb vorgegebenen Zeitpunkte zum Zünden des Ventils 16 bzw. 16' dargestellt. Zu den Zeitpunkten $t_1$, $t_2$ und $t_3$ treten jeweils Grenzwertüberschreitungen und somit Umpolungen der Ausgangsspannung auf. Analog zu Figur 2 erfolgt der auf den Eingriffsbefehl $t_1$ folgende Umschaltbefehl $t_-$ erst nach Ablauf der Eingriffszeit $\Delta t$. Beim Eingriff $t_2$ fällt jedoch der nächste Umschaltbefehl $t_-$ in die Eingriffszeit $\Delta t$ und wird daher, wie anhand der Figur 2 bereits erläutert wurde, unterdrückt. Beim Eingriff $t_3$ erfolgt der nächste Umschaltbefehl $t_+$ zwar nach Ablauf der Eingriffszeit $\Delta t$, jedoch würde die nach Beendigung des Eingriffes (Zeitpunkt $t_3 + \Delta t$) bis zum nächsten Umschaltbefehl $t_+$ verbleibende Zeit die Mindeststromdauer der Wechselrichterventile unterschreiten. Für solche Fälle ist bei handelsüblichen Wechselrichtern jedoch eine Mindestzeit-Verriegelung vorgesehen, durch die der Zeitpunkt für die nächste Umschaltung $t_+$ entsprechend verzögert wird.

Die Schaltungseinheit 41 zur Durchführung des Befehlseingriffes kann selbstverständlich auch unter Verwendung anderer logischer Bauglieder ausgeführt werden. Sie kann den Grenzwertmeldern 32, 33 nachgeordnet und mit der Überwachungseinrichtung 28 integriert sein, sie kann aber auch mit der Wechselrichtersteuerung 21 integriert ein und nur über die Befehlseingänge 29, 29' mit der Überwachungseinrichtung verbunden sein.

**Patentansprüche**

1. Tonfrequenzrundsteueranlage mit

a) einem Wechselrichter (11) mit eingeprägter Eingangsgleichspannung als Sender,
b) von den Phasenspannungen der Wechselrichterausgänge (5, 6, 7) über Längsinduktivitäten (4) gespeisten Stromwandlern (1, 2, 3) in Dreiecksschaltung zur Serieneinspeisung der Sendefrequenz in ein Wechselspannungs-Versorgungsnetz (R, S, T),
c) parallel zu den Stromwandlern (1, 2, 3) angeordneten Filterkreisen (9),
d) einer Zündsteuerung (21) mit einer Generatoreinrichtung (22) zum Bilden von Wechselrichterzündimpulsen, durch die während vorgegebener Sendetakte tonfrequente Phasenspannungen erzeugt werden, und mit einem Eingriffseingang (29, 29') zur Spitzenstrombegrenzung, um mittels eines Eingriffsbefehls in die Zündsteuerung die Spannungszeitflächen der tonfrequenten Phasenspannungen zu verkleinern, und
e) einer zwischen dem Wechselrichter und den Filterkreisen die Phasenströme erfassenden Überwachungseinrichtung (28) zur Abgabe des Eingriffsbefehls bei Überschreiten eines vorgegebenen Stromgrenzwertes ($+i_{gr}$, $-i_{gr}$) für den Spitzenstrom, gekennzeichnet durch folgende Merkmale

f) jedem der Wechselrichterausgänge (5, 6, 7) ist ein eigener Eingriffsbefehl zugeordnet, der von der Überwachungseinrichtung (28) dann abgegeben wird, wenn der zugeordnete Phasenstrom unabhängig von den anderen Phasenströmen den Grenzwert übersteigt und

g) bei einem Eingriffsbefehl wird nur in die Steuerung der zugeordneten Phasenspannung eingegriffen und dieser Phasenspannung ein Gleichspannungsanteil eingeprägt, indem die Spannungszeitfläche derjenigen tonfrequenten Halbwelle, deren Polarität dem Vorzeichen des Spitzenstromes entspricht, gegenüber der mittleren Spannungszeitfläche der tonfrequenten Spannungshalbwellen dadurch verringert wird, dass das bisher stromführende Ventil gesperrt und der betroffene Wechselrichterausgang durch Zünden des anderen Ventils auf Spannung umgekehrten Vorzeichens gelegt wird.

2. Rundsteueranlage nach Anspruch 1, gekennzeichnet durch eine Schalteranordnung (10a, 10b, 10c) zum Kurzschliessen der Filterkreise (9) während der Sendepausen zwischen den Sendetakten.

3. Rundsteueranlage nach Anspruch 1 oder 2, dadurch gekennzeichnet, dass bei jedem Eingriffsbefehl nur eine einmalige Verringerung der Spannungszeitfläche erzeugbar ist.

4. Rundsteueranlage nach einem der Ansprüche 1 bis 3, dadurch gekennzeichnet, dass bei jedem Eingriffsbefehl der Betrag der Verringerung konstant vorgegeben ist.

5. Rundsteueranlage nach einem der Ansprüche 1 bis 4, dadurch gekennzeichnet, dass die Zündsteuerung auf Pulsbetrieb des Wechselrichters ausgelegt ist und dass die Verringerung der Spannungszeitfläche einer Phasenspannung durch vorübergehende Umsteuerung des Wechselrichters auf eine Phasenausgangsspannung entgegengesetzter Polarität erfolgt.

6. Rundsteueranlage nach Anspruch 4 und 5, dadurch gekennzeichnet, dass der konstante Betrag der Verringerung durch eine der minimalen Stromführungsdauer des Wechselrichters entsprechende Dauer der Wechselrichtersteuerung auf entgegengesetzte Ausgangspolarität festgelegt ist.

**Claims**

1. Audio-frequency powerline carrier control arrangement with

a) an inverter (11), with an impressed direct input voltage, as a transmitter,
b) current transformers (1, 2, 3) in delta connection fed from the phase voltages of the inverter outputs (5, 6, 7) via series inductances (4), for series-feeding the transmitting frequency into an alternating voltage supply network (R, S, T),

c) filter circuits (9) arranged parallel to the current transformers (1, 2, 3),

d) an ignition controller (21) with a generator device (22) for forming inverter ignition pulses by means of which audio-frequency phase voltages are produced during predetermined transmission periods, and with an intervention input (29, 29') for limiting peak currents, in order to reduce the voltage-time areas of the audio-frequency phase voltages by means of a command to intervene in the ingnition control, and

e) a monitoring device (28) determining the phase currents between the inverter and the filter circuits, for emitting the intervention command when a predetermined threshold current value $(+i_{gr}, -i_{gr})$ for the peak current is exceeded, characterised by the following features

f) assigned to each of the inverter outputs (5, 6, 7) is its own intervention command, which is emitted by the monitoring device (28) when the associated phase current exceeds the threshold value independently of the other phase currents, and

g) in the event of an intervention command, intervention is only in the control of the associated phase voltage and a direct voltage portion is impressed onto this phase voltage, whilst the voltage-time area of the audio-frequency half-wave whose polarity corresponds to the sign of the peak current, is reduced, with respect to the mean voltage-time area of the audio-frequency voltage half-waves, by the hitherto current-carrying valve being blocked and the relevant inverter output being applied at voltage of opposite sign by ignition of the other valve.

2. Powerline carrier control arrangement according to claim 1, characterised by a switch arrangement (10a, 10b, 10c) for short-circuiting the filter circuits (9) during the breaks in transmission between the transmission periods.

3. Powerline carrier control arrangement according to claim 1 or 2, characterised in that for each intervention command, reduction of the voltage-time area can be effected only once.

4. Powerline carrier control arrangement according to one of claims 1 to 3, characterised in that for each intervention command, the amount of reduction is predetermined to be constant.

5. Powerline carrier control arrangement according to one of the claims 1 to 4, characterised in that the ignition control is subjected to pulse operation of the inverter, and in that the reduction in the voltage-time area of a phase voltage is effected by a temporary switch-over of the inverter to an output phase voltage of opposite polarity.

6) Powerline carrier control arrangement according to claims 4 and 5, characterised in that the constant amount of reduction is fixed at an opposite output polarity by a period of inverter control corresponding to the minimum period of power supply of the inverter.

## Revendications

1. Télécommande centralisée à fréquence vocale comportant

a) un onduleur (11) auquel une tension continue d'entrée est appliquée, en tant qu'émetteur,

b) des transformateurs de courant (1, 2, 3) alimentés par des tensions de phase des sorties (5, 6, 7) de l'onduleur, par l'intermédiaire d'inductances série (4), et montés en triangle pour l'introduction en série de la fréquence d'émission dans un réseau d'alimentation (R, S, T) de tension alternative,

c) des circuits de filtrage (9) montés en parallèle sur les transformateurs de courant (1, 2, 3),

d) un dispositif de commande d'amorçage (21) qui comporte un dispositif générateur (22) pour former des impulsions d'amorçage de l'onduleur par l'intermédiaire desquelles des tensions de phase à fréquence vocale sont produites pendant des cycles d'émission prédéterminés, ainsi qu'une entrée d'intervention (29, 29') pour la limitation du courant de pointe, pour réduire les surfaces tension-temps des tensions de phase à fréquence vocale, au moyen d'un ordre d'intervention, dans le dispositif d'amorçage, et

e) un dispositif de surveillance (28) détectant les courants de phase entre l'onduleur et les circuits de filtrage pour délivrer l'ordre d'intervention lors du dépassement d'une valeur limite de courant prédéterminée $(+i_{gr}, -i_{gr})$ pour le courant de pointe, caractérisée par les caractéristiques suivantes,

f) à chacune des sorties (5, 6, 7) de l'onduleur est associé un ordre d'intervention propre qui est alors délivré par le dispositif de surveillance (28), lorsque le courant de phase associé dépasse la valeur limite indépendamment des autres courants de phase, et

g) lors d'un ordre d'intervention, une intervention n'est effectuée que sur la commande de la tension de phase associée et une composante de tension continue est appliquée à cette tension de phase, par le fait que la surface tension-temps de l'alternance à fréquence vocale, dont la polarité correspond au signe du courant de pointe, est réduite par rapport à la surface tension-temps moyenne des alternances de tension à fréquence vocale grâce au fait que la valve conduisant jusqu'alors le courant est bloquée et que la sortie concernée de l'onduleur est commutée sur une tension de signe inverse, par amorçage de l'autre valve.

2. Télécommande centralisée suivant la revendication 1, caractérisée par un agencement de commutateurs (10a, 10b, 10c) pour court-circuiter les circuits de filtrage (9) pendant les pauses d'émission entre les cycles d'émission.

3. Télécommande centralisée suivant la revendication 1 ou 2, caractérisée par le fait que pour chaque ordre d'intervention seule une réduction unique de la surface tension-temps peut être produite.

4. Télécommande centralisée suivant l'une des revendications 1 à 3, caractérisée par le fait que pour chaque ordre d'intervention la valeur de la réduction est prédéterminée de façon constante.

5. Télécommande centralisée suivant l'une des revendications 1 à 4, caractérisée par le fait que le dispositif de commande d'amorçage est conçu pour un fonctionnement pulsé de l'onduleur, et que la réduction de la surface tension-temps d'une tension de phase a lieu par inversion temporaire de la commande de l'onduleur sur une tension de sortie de phase de polarité opposée.

6. Télécommande centralisée suivant la revendication 4 ou 5, caractérisée par le fait que la valeur constante de la réduction est déterminée par une durée de la commande de l'onduleur sur une polarité de sortie opposée qui correspond à la durée minimale d'alimentation en courant de l'onduleur.

FIG 1

FIG 2

FIG 3